# EUROPÄISCHE PATENTSCHRIFT

(11) **EP 2 914 870 B1**
(45) Veröffentlichungstag und Bekanntmachung des Hinweises auf die Patenterteilung: **09.12.2020**
(21) Anmeldenummer: 13794804.8
(22) Anmeldetag: 30.10.2013
(51) Int. Cl.: F16D 65/56

(54) **SCHEIBENBREMSENANORDNUNG MIT EINER ELEKTRISCHEN BELAGVERSCHLEISSNACHSTELLVORRICHTUNG UND VERFAHREN ZUM STEUERN DER ELEKTRISCHEN BELAGVERSCHLEISSNACHSTELLVORRICHTUNG**
DISC BRAKE ASSEMBLY COMPRISING AN ELECTRIC LINING-WEAR ADJUSTING DEVICE AND METHOD FOR CONTROLLING THE ELECTRIC LINING-WEAR ADJUSTING DEVICE
ENSEMBLE FREIN À DISQUE À DISPOSITIF DE RATTRAPAGE ÉLECTRIQUE D'USURE DE GARNITURE ET PROCÉDÉ DE COMMANDE DUDIT DISPOSITIF DE RATTRAPAGE ÉLECTRIQUE D'USURE DE GARNITURE

(30) Priorität: 31.10.2012 DE 102012110448
(43) Veröffentlichungstag der Anmeldung: 09.09.2015
(73) Patentinhaber: KNORR-BREMSE Systeme für Nutzfahrzeuge GmbH, 80809 München (DE)
(72) Erfinder: BAUMGARTNER, Johann, 85368 Moosburg (DE)
(86) Internationale Anmeldenummer: PCT/EP2013/003261
(87) Internationale Veröffentlichungsnummer: WO 2014/067654

(56) Entgegenhaltungen:
- DE-A1- 19 731 696
- US-A- 5 848 672
- US-A1- 2003 029 681
- US-A1- 2006 201 756

## Beschreibung

Die Erfindung betrifft eine Scheibenbremsenanordnung mit einer elektrischen Belagverschleißnachstellvorrichtung, insbesondere für ein Kraftfahrzeug, nach dem Oberbegriff des Anspruchs 1. Die Erfindung bezieht sich auch auf ein Verfahren zum Steuern einer elektrischen Belagverschleißnachstellvorrichtung.

Scheibenbremsenanordnungen mit derartigen Belagverschleißnachstellvorrichtungen sind in unterschiedlichen Ausführungen bekannt, wie z.B. mechanische Nachsteller mit automatischem Einregeln eines Reibepunkts. Dabei wird bei jeder Bremsbetätigung die Nachstellvorrichtung, z.B. durch ein Zustellelement einer Zuspannvorrichtung der Scheibenbremse, aktiviert. Bei Verschleiß von Bremsbelägen und Bremsscheibe erfolgt ein automatisches Nachstellen der Beläge mittels der Nachstellvorrichtung z.B. durch eine Verstellbewegung von längenveränderlichen Druckstempeln. EP 1 476 673 B1 beschreibt eine Scheibenbremse mit elektromotorisch angetriebener Nachstellvorrichtung und ein Verfahren zum Steuern einer Scheibenbremse.

Dokument US2003/029681 A1 offenbart eine Scheibenbremsenanordnung gemäß dem Oberbegriff des Anspruchs 1.

Die Aufgabe der vorliegenden Erfindung besteht darin, eine verbesserte Scheibenbremsenanordnung und ein verbessertes Verfahren zum Steuern einer Belagverschleißnachstellvorrichtung bereitzustellen.

Die Aufgabe wird durch eine Scheibenbremsenanordnung mit den Merkmalen des Anspruchs 1 und durch ein Verfahren mit den Merkmalen des Anspruchs 13 gelöst.

Eine erfindungsgemäße Scheibenbremsenanordnung mit einer Scheibenbremse, insbesondere für ein Kraftfahrzeug, die eine Zuspannvorrichtung, insbesondere mit einem Bremsdrehhebel, mindestens eine Spindeleinheit, eine Belagverschleißnachstellvorrichtung mit einer Nachstelleinrichtung mit einer Elektromagnetkupplung und eine Sensoreinrichtung aufweist, und mit einer Steuereinrichtung, wobei die Nachstelleinrichtung über einen Antrieb mit der Zuspannvorrichtung, insbesondere mit dem Bremsdrehhebel, gekoppelt ist. Die Elektromagnetkupplung ist als Reibungskupplung ausgebildet.

Erfindungsgemäß weist die Elektromagnetkupplung einen an einem Bremssattel der Scheibenbremse ortsfest angeordneten Spulenträger mit einer Elektromagnetspule und einen zum Spulenträger drehbar angeordneten Magnetkörper auf, der mit einer Nachstellenwelle der Nachstelleinrichtung koppelbar ist. Dadurch wird gleichzeitig eine Lagerung der Nachstelleinrichtung am Bremssattel geschaffen, wodurch ein weiterer Vorteil in der Kompaktheit besteht.

Durch die Ausführung als Reibungskupplung wird ein Durchrutschen bei Erreichen eines vorgebbaren Grenzdrehmomentes ermöglicht. Ein Anlegepunkt der Scheibenbremse kann somit durch das Erfassen dieses Durchrutschens einfach bestimmt werden, wobei die Vorteile einer elektrisch schaltbaren Kupplung beibehalten werden.

Ein erfindungsgemäßes Verfahren zum Steuern einer elektrischen Belagverschleißnachstellvorrichtung einer solchen Scheibenbremsenanordnung weist die folgenden Verfahrensschritte auf: (S1) Einschalten der Elektromagnetkupplung zu Beginn einer Bremsbetätigung und Erfassen eines aktuellen Lüftspiels durch Ermitteln eines Anlegepunkts; (S2) Erkennen einer Veränderung des Lüftspiels durch Vergleich mit einem vorher festgelegten Wert eines Soll-Lüftspiels; und (S3) Steuern der elektrischen Belagverschleißnachstellvorrichtung zum Einstellen des Werts des Soll-Lüftspiels.

Erfindungsgemäß wird das Ermitteln des Anlegepunkts durch Erfassen einer Schwenkbewegung eines Magnetkörpers der Elektromagnetkupplung und Erfassen einer Drehbewegung einer Nachstellerwelle der Nachstelleinrichtung durchgeführt. Dies kann mit einer gemeinsamen Sensoreinrichtung gleichzeitig erfolgen.

Auf diese Weise wird eine elektronische Ansteuerung der Elektromagnetkupplung vereinfacht, da sie nicht exakt bei Erreichen des Anlegepunkts ausgeschaltet werden muss. Auch Anforderungen an eine Ansprechzeit einer Elektromagnetkupplung können so verringert werden, was einen Kostenvorteil ermöglichen kann.

Die Elektromagnetkupplung kann z.B. eine handelsübliche Type mit z.B. 3 Nm Haltemoment sein, wobei eine hohe Qualität bei gleichzeitigen niedrigen Kosten möglich ist.

Weitere vorteilhafte Ausgestaltungen sind in den Unteransprüchen angegeben.

Wenn der Magnetkörper über den Antrieb mit der Zuspannvorrichtung, insbesondere mit dem Bremsdrehhebel, gekoppelt ist, ergibt sich der Vorteil eines besonders raumsparenden Aufbaus.

In einer weiteren Ausführung ist der Magnetkörper zumindest teilweise mit einer Reibfläche versehen, wobei der Magnetkörper und die Reibfläche zur Zusammenwirkung mit einer Ankernabe, die mit der Nachstellerwelle drehfest gekoppelt ist, vorgesehen sind. Auf diese Weise lässt sich eine Rutschkupplung in einfacher Weise in die Elektromagnetkupplung integrieren.

In einer noch weiteren Ausführung ist zwischen der Ankernabe und dem Magnetkörper mit der Reibfläche eine Ankerscheibe angeordnet. Dadurch kann ein Durchrutschmoment mit höherer Genauigkeit vorgesehen werden.

Dazu kann auch die Ankerscheibe mit der Ankernabe über ein Federelement verbunden sein. Das Federelement kann z.B. eine Federlamelle sein, welche das Drehmoment überträgt und gleichzeitig eine leichte Druckkraft auf die Ankerscheibe bewirken kann, wodurch eine Überbrückung von Bautoleranzen und verschleißbedingten Abstandsänderungen ermöglich werden kann.

In einer anderen Ausführung ist vorgesehen, dass die Sensoreinrichtung mindestens einen Zuspannwegsensor und mindestens einen Belagverschleißsensor, insbesondere für einen Schwenkhub des Bremsdrehhebels, aufweist. Besonders vorteilhaft dabei ist, dass diese Sensoren in einer Einheit zusammengefasst sind, wobei gleichzeitig die elektronischen Auswerte- und Betriebsschaltungen mit integriert werden können.

Dabei ist es außerdem vorteilhaft, dass die Nachstelleinrichtung den mindestens einen Zuspannwegsensor und den mindestens einen Belagverschleißsensor aufweist. Zum Beispiel kann somit die Erfassung von Hebelschwenkhub, Nachstelldrehbewegung und Anlegen der Bremse über zwei koaxial ineinander angeordnete Decodierscheiben oder vergleichbare Messelemente ermöglich werden.

Zudem erweist es sich als besonders vorteilhaft, dass der zylindrische, die Lagerung aufnehmende Bereich des Magnetkörpers die diesen durchdringenden Bereich der Nachstellerwelle der Nachstelleinrichtung umschließt und diese beiden Endbereiche des zylindrischen Bereichs des Magnetkörpers und der Nachstellerwelle am Sattelrücken des Bremssattels durchgeführt werden können. So können diese Wellenenden, an denen die Dreh-/Schwenkbewegungen durch die Sensoren erfasst werden sollen, in ein auf den Bremssattel aufgesetztes Elektronikgehäuse hineinragen. Es bietet sich damit auch die Möglichkeit, die notwendige Sensorelektronik mit Steuerelektronik der Elektromagnetkupplung und ggf. anderen vorhandenen Elektronikfunktionen, z.B. Temperatursensoren, zusammenzufassen.

So kann der mindestens eine Zuspannwegsensor als Magnetkörpersensor mit dem Magnetkörper der Elektromagnetkupplung gekoppelt sein, und der mindestens eine Belagverschleißsensor als Nachstellersensor mit der Nachstellerwelle gekoppelt sein. Damit ist es vorteilhaft möglich, dass alle für die Erfassung von Lüftspiel und Belagverschleiß erforderlichen Messgrößen an den Bauteilen der Elektromagnetkupplung und der Nachstellerwelle erfassbar sind.

Weiterhin ist es vorgesehen, dass die Nachstelleinrichtung in einer Ausführung in einer Spindeleinheit der Scheibenbremse oder in einer anderen Ausführung zwischen zwei Spindeleinheiten der Scheibenbremse angeordnet ist. Bei letzterer Ausführung kann der Bremsdrehhebel gabelförmig ausgebildet sein.

Weiterhin ist es in einer anderen Ausführung vorgesehen, dass die Nachstelleinrichtung zwischen zwei Spindeleinheiten der Scheibenbremse angeordnet ist, wobei die Nachstellerwelle der Nachstelleinrichtung mit einem Antriebsrad gekoppelt ist, das mit Synchronrädern einer Synchroneinrichtung in Eingriff steht, und wobei das Antriebsrad mit einem Reibelement, welches von einem Kraftspeicherelement mit einer Kraft beaufschlagt ist, in Kontakt steht. Dabei ergibt sich der Vorteil, dass das Reibelement nicht nur verdrehgesichert und axial verschiebbar ist, sondern auf diese Weise an dem Antriebsrad ein definiertes Haltemoment erzeugen kann.

Wenn das Antriebsrad in einer weiteren Ausführung über Antriebsradlager in einem Verbindungsblech gelagert ist, können Relativbewegungen weitgehend reduziert werden, die zu Ungenauigkeiten führen könnten.

Außerdem können Gewindebuchsen der Spindeleinheiten an dem Verbindungsblech jeweils über ein Buchsenlager gelagert sein, was zu einer höheren Einstellgenauigkeit führt.

Wenn das Steuern der elektrischen Belagverschleißnachstellvorrichtung zum Einstellen des Werts des Soll-Lüftspiels nach einer Fallunterscheidung erfolgt, kann z.B. die Elektromagnetkupplung überhaupt nicht eingeschaltet werden, wenn keine Nachstellung erforderlich ist; kann die Elektromagnetkupplung auch bei einem Lösevorgang eingeschaltet werden, um eine Lüftspielvergrößerung zu bewirken; und die Elektromagnetkupplung kann gezielt für einen bestimmten Zeitabschnitt beim Zuspannen eingeschaltet werden.

So kann z.B. das Steuern der elektrischen Belagverschleißnachstellvorrichtung durch eine Schrittsteuerung innerhalb eines vorgebbaren Justagestreubands erfolgen. Dabei ist eine Weite des Justagestreubands größer als eine Schrittweite der Nachstelleinrichtung im Bereich des Soll-Lüftspiels.

Alternativ kann eine Weite des Justagestreubands auch unter der Schrittweite der Nachstelleinrichtung angesetzt werden, wobei bei Annäherung an den Wert des Soll-Lüftspiels die Elektromagnetkupplung kurzzeitig eingeschaltet wird. Dadurch kann eine hohe Einstellgenauigkeit erzielt werden.

Die Erfindung wird nun anhand beispielhafter Ausführungen mit Bezug auf die beigefügten Zeichnungen näher erläutert. Hierbei zeigen:
- Fig. 1: eine schematische Teilschnittansicht eines ersten Ausführungsbeispiels einer erfindungsgemäßen Scheibenbremsenanordnung mit einer elektrischen Belagverschleißnachstellvorrichtung;
- Fig. 2: eine schematische grafische Darstellung von Nachstellverhalten verschiedener Belagverschleißnachstellvorrichtungen;
- Fig. 3-4: schematische grafische Darstellungen von Kraft-Weg-Kennlinien von Bremsen;
- Fig. 5: eine schematische Schnittansicht eines zweiten Ausführungsbeispiels der erfindungsgemäßen Scheibenbremsenanordnung;
- Fig. 6: eine Variante des zweiten Ausführungsbeispiels nach Fig. 5;
- Fig. 7: eine weitere Variante des zweiten Ausführungsbeispiels nach Fig. 5; und
- Fig. 8: ein schematisches, beispielhaftes Flussdiagramm eines erfindungsgemäßen Verfahrens.

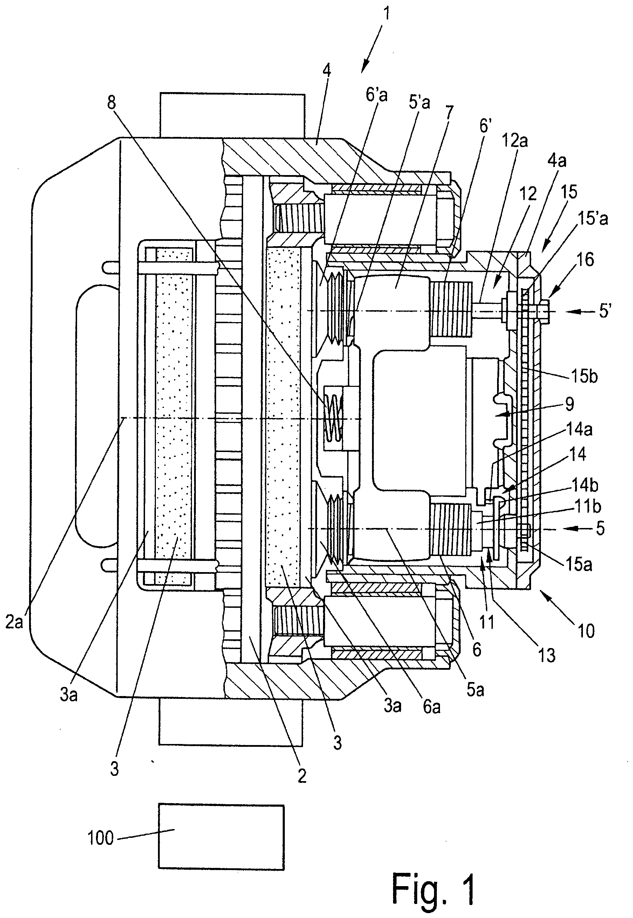

Fig. 1 zeigt eine schematische Teilschnittansicht eines ersten Ausführungsbeispiels einer erfindungsgemäßen Scheibenbremsenanordnung mit einer Scheibenbremse 1 in einer Draufsicht und einer Steuereinrichtung 100. Die Scheibenbremse 1 weist eine Belagverschleißnachstellvorrichtung 10 und eine Synchronisationseinheit 15 auf.

Die Scheibenbremse 1 weist eine Bremsscheibe 2 mit einer Bremsscheibenachse 2a auf. Die Bremsscheibe 2 ist von einem, hier als Schwimmsattel ausgeführten, Bremssattel 4 übergriffen ist. Beiderseits der Bremsscheibe 2 ist ein Bremsbelag 3 mit jeweils einem Bremsbelagträger 3a angeordnet. Die Scheibenbremse 1 ist hier als zweistempelige Bremse mit zwei Spindeleinheiten 5 und 5' mit jeweils einem Gewindestempel 6, 6' ausgebildet. Jede Spindeleinheit 5, 5' besitzt eine Spindelachse 5a, 5'a, wobei hier die Spindelachsen 5a, 5'a parallel zueinander und zu der Bremsscheibendrehachse 2a sind. Die in Fig. 1 rechts befindliche Seite der Scheibenbremse 1 wird als Zuspannseite bezeichnet.

Der zuspannseitige Bremsbelagträger 3a steht mit den Spindeleinheiten 5, 5' an Enden der Gewindestempel 6, 6' über Druckstücke 6a, 6'a in Verbindung. Der andere, Bremsbelagträger 3a wird auch reaktionsseitiger Bremsbelagträger 3a genannt und ist auf der anderen Seite der Bremsscheibe 2 im Bremssattel 4 festgelegt. Die Gewindestempel 6, 6' sind hier jeweils in einer Traverse 7 in Gewinden verdrehbar angeordnet.

Die Traverse 7 und somit die Gewindestempel 6, 6' sind von einer Zuspannvorrichtung, hier ein Bremsdrehhebel 9 mit einer Schwenkachse rechtwinklig zu einer Drehachse der Bremsscheibe 2 betätigbar. Dabei ist die Traverse 7 in Richtung der Bremsscheibendrehachse 2a durch den Bremsdrehhebel 9 verstellbar. Eine Bewegung auf die Bremsscheibe 2 wird als Zuspannbewegung bezeichnet, und eine Bewegung in Gegenrichtung wird Lösebewegung genannt. Eine nicht weiter erläuterte Rückstellfeder 8 ist in der Mitte der Traverse 7 in einer entsprechenden Ausnehmung auf der belagseitigen Seite der Traverse 7 aufgenommen und stützt sich am Bremssattel 4 ab. Mittels der Rückstellfeder 8 wird die Traverse 7 bei der Lösebewegung in die in Fig. 1 gezeigte gelöste Stellung der Scheibenbremse 1 verstellt.

Ein Abstand zwischen den Bremsbelägen 3 und der Bremsscheibe 2 in der gelösten Stellung wird als Lüftspiel bezeichnet. Infolge von Belag- und Scheibenverschleiß wird dieses Lüftspiel größer. Wenn dies nicht kompensiert wird, kann die Scheibenbremse 1 ihre Spitzenleistung nicht erreichen, da ein Betätigungshub der Betätigungsmechanik, d.h. hier der Betätigungshub bzw. ein Schwenkwinkel des Bremsdrehhebels 9, nicht mehr ausreicht.

Die Scheibenbremse 1 kann unterschiedliche Kraftantriebe aufweisen. Der Drehhebel 9 wird hier z.B. pneumatisch betätigt. Zu Aufbau und Funktion einer pneumatischen Scheibenbremse 1 wird auf die entsprechende Beschreibung der DE 197 29 024 C1 verwiesen.

Die Belagverschleißnachstellvorrichtung 10 ist zur Einstellung eines vorher festgelegten Lüftspiels, das als Nominallüftspiel bezeichnet wird, ausgebildet. Unter dem Begriff "Einstellung" ist sowohl eine Lüftspielverkleinerung als auch eine Lüftspielvergrößerung zu verstehen. Das vorher festgelegte Lüftspiel ist durch die Geometrie der Scheibenbremse 1 bestimmt und kann ein so genanntes konstruktives Lüftspiel aufweisen. Mit anderen Worten, die Belagverschleißnachstellvorrichtung 10 verkleinert ein vorhandenes Lüftspiel, wenn dieses in Bezug auf ein das vorher festgelegte Lüftspiel zu groß ist, und die Belagverschleißnachstellvorrichtung 10 vergrößert ein vorhandenes Lüftspiel, wenn dieses in Bezug auf ein das vorher festgelegte Lüftspiel zu klein ist.

Die Belagverschleißnachstellvorrichtung 10 umfasst hier eine Nachstelleinrichtung 11 und eine Mitnehmereinrichtung 12. Die Nachstelleinrichtung 11 weist eine Nachstellerwelle 11b auf und ist an der einen Spindeleinheit 5 koaxial zu dieser, zu deren Gewindestempel 6 und Spindelachse 5a angeordnet und mit dem Gewindestempel 6 gekoppelt. Außerdem ist die Nachstelleinrichtung 11 mit einer Elektromagnetkupplung 13 versehen. Die Bauteile und Funktionsgruppen der Nachstelleinrichtung 11 werden unten noch ausführlich erläutert.

Die Mitnehmereinrichtung 12 weist eine Mitnehmerwelle 12a auf und ist koaxial zu der anderen Spindeleinheit 5', zu deren Gewindestempel 6' und Spindelachse 5'a angeordnet und mit dem Gewindestempel 6' gekoppelt. In diesem Ausführungsbeispiel ist das zuspannseitige Ende des Gewindestempels 6' der Mitnehmereinrichtung 12 mit einer Sensoreinrichtung 16 gekoppelt, die weiter unten noch näher beschrieben wird.

Die Nachstelleinrichtung 11 der Belagverschleißnachstellvorrichtung 10 steht über einen Antrieb 14 mit dem Drehhebel 9 in Zusammenwirkung. Der Antrieb 14 umfasst einen Betätiger 14a, welcher mit dem Bremsdrehhebel 9 verbunden ist, und ein Antriebselement 14b, welches über die Elektromagnetkupplung 13 mit der Nachstelleinrichtung 11 gekoppelt ist.

Die Nachstelleinrichtung 11 und die Mitnehmereinrichtung 12 sind durch eine Synchroneinrichtung 15 derart gekoppelt, dass eine Verdrehbewegung des Gewindestempels 6 um die Spindelachse 5a eine Verdrehbewegung des Gewindestempels 6' um die andere Spindelachse 5'a bewirkt und umgekehrt. Die Synchroneinrichtung 15 ist hier auf der Zuspannseite oberhalb des Bremssattels 4 unter einem Deckel 4a angeordnet und umfasst in diesem ersten Ausführungsbeispiel ein Synchronrad 15a, das mit dem Gewindestempel 6 der einen Spindeleinheit 5 und mit der Nachstelleinrichtung 11 gekoppelt ist, ein weiteres Synchronrad 15'a, das mit dem Gewindestempel 6' der anderen Spindeleinheit 5' und mit der Mitnehmereinrichtung 12 gekoppelt ist, und ein Synchronmittel 15b, mit welchem die Synchronräder 15a und 15'a gekoppelt sind. In diesem Ausführungsbeispiel sind die Synchronräder 15a, 15'a Kettenräder und das Synchronmittel 15b eine Kette. Damit ist eine synchrone Drehbewegung der Gewindestempel 6, 6' der Spindeleinheiten 5 und 5' bei Einstellvorgängen des Lüftspiels (Antrieb durch die Nachstelleinrichtung 11) und Einstellungen bei Wartungsarbeiten, z.B. Belagwechsel, (manueller Antrieb z.B. über ein nicht gezeigtes Betätigungsende der Mitnehmereinrichtung 12 gewährleistet.

Die Elektromagnetkupplung 13 der Nachstelleinrichtung 11 ist elektronisch gesteuert ausgebildet. Das heißt, dass eine Ansteuerung (Einschalten und Ausschalten) der Elektromagnetkupplung 13 durch die Steuereinrichtung 100 (z.B. über elektrische Schalter, beispielsweise Relais oder/und Halbleiterschalter) erfolgt, wobei die Steuereinrichtung 100 mit einem nicht gezeigten Bremssteuergerät gekoppelt ist. Außerdem ist die Steuereinrichtung 100 mit der Sensoreinrichtung 16 verbunden. Die Steuereinrichtung 100 kann auf diese Weise Parameter zur Einstellung des Lüftspiels der Scheibenbremse 1 erfassen. Diese Parameter sind z.B. das aktuelle Lüftspiel, Bremsbetätigungen, Bremsdauer, Bremskraft, Anlegepunkt, Lösepunkt und weitere. Werte des Nominal-(Soll-)Lüftspiels, Mindestlüftspiels und konstruktiven Lüftspiels sind in einer Speichereinrichtung der Steuereinrichtung 100 einstellbar gespeichert. Es handelt sich somit um eine "elektrisch und elektronisch aktivierte, mechanische Verschleißnachstell- bzw. Lüftspieleinstell-Einrichtung".

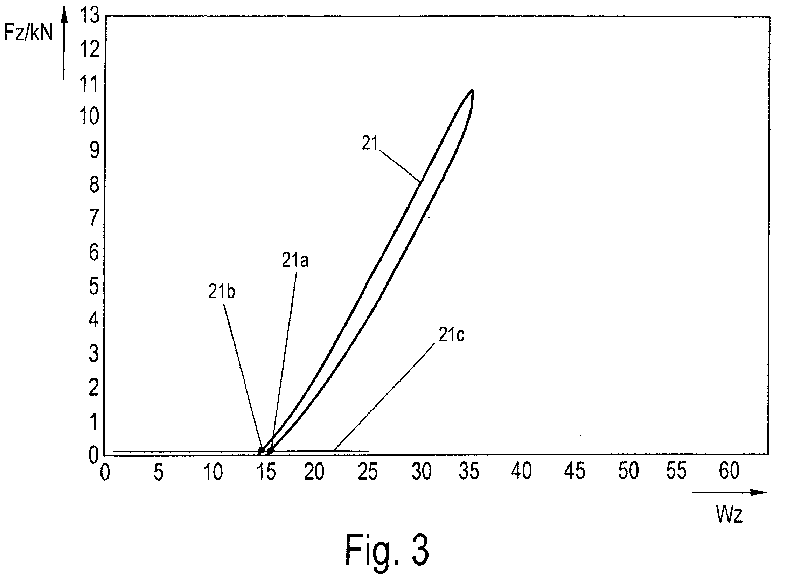

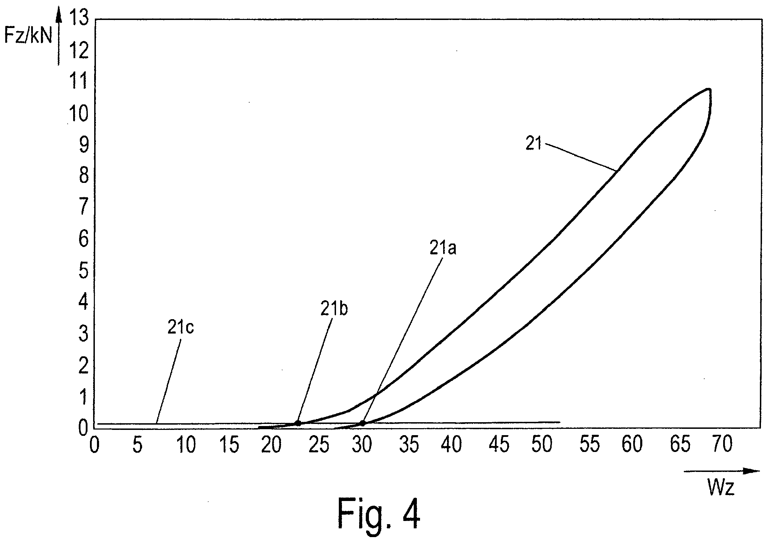

Der Begriff "Anlegepunkt" (oder auch "Reibepunkt") ist der Punkt, in welchem der Bremsbelag 3 an der Bremsscheibe 2 der Scheibenbremse 1 anliegt. Der Anlegepunkt wird beim Zuspannen nach Überbrückung des Lüftspiels erreicht. Weiteres Zuspannen (Überhub) bewirkt dann durch Anpressen des Bremsbelags 3 an die Bremsscheibe 2 einen Bremsvorgang bzw. eine Bremsung. Ein Lösen der Zuspannvorrichtung bewirkt eine Umkehrung des oben beschriebenen Vorgangs. Dabei wird das Lösen von der Bremsscheibe als "Lösepunkt" bezeichnet (siehe auch Fig. 3, 4).

Die Wirkungsweise wird nun kurz erläutert.

Der Antrieb 14 der Nachstelleinrichtung 11 erfolgt über den Betätiger 14a aus der Schwenkbewegung des Bremsdrehhebels 9 über das Antriebselement 14b über die Elektromagnetkupplung 13 auf die Nachstellerwelle 11b. Die Elektromagnetkupplung 13 ist geschlossen, d.h. aktiviert und eingekuppelt, wenn Bedarf einer Lüftspieleinstellung besteht.

Zum Zweck der Lüftspielverkleinerung (Lüftspielreduzierung) ist die Elektromagnetkupplung 13 beim so genannten Betätigungshub (Zuspannbewegung des Bremsdrehhebels 9) bestromt bzw. eingekuppelt, und zum Zweck der Lüftspielvergrößerung beim Rückhub (Lösebewegung des Bremsdrehhebels 9) bestromt (oder umgekehrt, je nach Steigungsrichtung des Gewindes der Gewindestempel 6, 6').

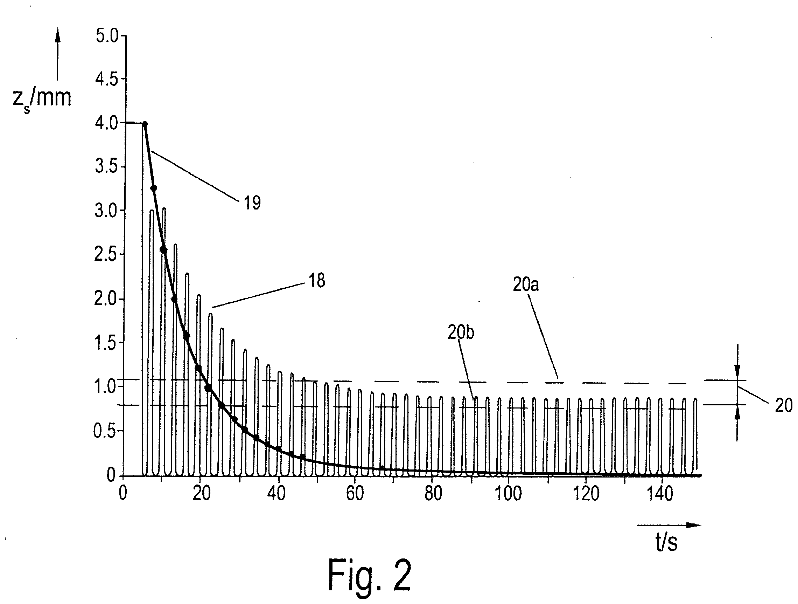

Fig. 2 zeigt eine schematische grafische Darstellung von Nachstellverhalten verschiedener Belagverschleißnachstellvorrichtungen. Fig. 3 und 4 zeigen schematische grafische Darstellungen von Kraft-Weg-Kennlinien von Bremsen.

In Fig. 2 sind zwei Nachstellkurven 18 und 19 jeweils als Zuspannweg zₛ über der Zeit t aufgetragen. Außerdem ist ein Justagestreuband 20 mit einer oberen Streubandgrenze 20a und einer unteren Streubandgrenze 20b eingezeichnet. Das Bezugszeichen 18 bezieht sich auf eine Hüllkurve, die von den lokalen Maxima einzelner Schrittkurven gebildet ist und das Nachstellverhalten eines üblichen mechanischen Nachstellers verdeutlicht. Dabei erfolgt die Lüftspieleinstellung in Schritten beim Betätigen der Scheibenbremse 1. Die Schrittweite ist von der Größe des ausgeführten Leerhubs abhängig. Der Leerhub ergibt sich aus dem gesamten Lüftspiel, d.h. Endlüftspiel + Überhub. Bei einem mechanischen Nachsteller ist ein Nachstellfaktor proportional dem Überhub und geht damit bei Annäherung an das Endlüftspiel gegen Null. Dies ist eine asymptotische Annäherung an das Endlüftspiel, welches in Fig. 2 als die untere Streubandgrenze 20b des Justagestreubands 20 dargestellt ist.

Die Nachstellkurve 19 stellt das Nachstellverhalten der Belagverschleißnachstellvorrichtung 10 dar. Es ist hierbei kein eingeprägtes Endlüftspiel (konstruktives Lüftspiel) vorhanden. Auch hier erfolgt die Lüftspielveränderung wie beim mechanischen Nachsteller in Schritten. So ist bei Erreichen des Soll-Lüftspiels bei 1,0 mm (obere Streubandgrenze 20a) eine relativ große Schrittweite von 0,1...0,2 mm (angedeutet durch Punkte) auf der Kurve 19 vorhanden. Bei weiterer Aktivierung strebt die Kurve 19 asymptotisch gegen das Lüftspiel Null.

Es ist denkbar, dass z.B. zur Sicherung eines Mindestlüftspiels ein eingeprägtes, d.h. konstruktives, Lüftspiel vorgesehen wird, welches deutlich unter dem Soll-Lüftspiel von 1,0 mm liegt, z.B. 0,3...0,5 mm.

Eine exakte Steuerung des Öffnungszeitpunktes der Elektromagnetkupplung 13 zur Beendigung eines Nachstellvorgangs, d.h. eines Einstellvorgangs zur Verkleinerung des Lüftspiels, wird durch ein definiertes Durchrutschen der die entsprechende Drehbewegung übertragenden Kupplung gesteuert. Zu diesem Zweck ist die Elektromagnetkupplung 13 mit einem definierten Haltemoment ausgebildet. Zweckmäßig kann auch das Durchrutschen der Kupplung sensiert und damit der "Anlegepunkt" der Scheibenbremse 1 erfasst werden. Das Erfassen des Anlegepunktes wird unten noch näher beschrieben. Nach Erkennen dieses Anlegepunktes wird die Elektromagnetkupplung 13 wieder ausgeschaltet, d.h. ausgekuppelt.

Zur weiteren Erläuterung des Anlegepunktes werden die Figuren 3 und 4 betrachtet, in welchen jeweils eine Kurve 21 eine Kraft-Weg-Kennlinie einer Bremse als Zuspannkraft F_{z} über einem Zylinderweg W_{z} (Pneumatikbetätigungszylinder) eingetragen ist.

Als Anlegepunkt 21a wird der Zustand der Scheibenbremse 1 bei Beginn der Betätigung bezeichnet, bei welchem gerade beiden Bremsbelägen 3 vollflächig an der Reibfläche der Bremsscheibe 2 anliegen und der Aufbau der Bremskraft beginnt. Besonders bei ungleichmäßig verschlissenen Bremsen ist dieser Zustand schwierig zu erfassen. Als Anlegepunkt 21a wird deshalb bei bestimmten Bremstypen der Zustand in der Betätigungsphase definiert, bei dem die Betätigungskraft (z.B. des Pneumatikbetätigungszylinders) einen bestimmten Wert erreicht (z.B. 150 N). Diese Zuspannkraft F_{z} ist in den Figuren 3 und 4 als Ansprechkraft 21c dargestellt. Der Punkt 21b ist der so genannte Lösepunkt beim Lösen der Bremse, wenn die Zuspannkraft F_{z} bis zur Ansprechkraft 21c verringert ist.

In Fig. 3 ist die Kraft-Weg-Kennlinie als Kurve 21 für eine Bremse dargestellt, bei der die Bremsbeläge 3 durch Stahlklötze ersetzt wurden. Dies stellt sozusagen den Idealzustand des Kraft-Weg-Verlaufes dar. Es ist deutlich zu sehen, dass bei einer Zuspannkraft F_{z} von 100 N der Anlegepunkt 21a und der Lösepunkt 21b der Bremse sehr nahe beieinander liegen. Fig. 4 stellt den Zustand (Neuzustand) für eine Bremse mit Bremsbelägen 3 dar. Es ist zu erkennen, dass der Anlegezustand im Bereich einer Zuspannkraft F_{z} bis zu 500 N sehr stark verzogen ist. Ursache sind Unebenheiten und Elastizität des Bremsbelags 3. Ebenso wird aufgrund der größeren Hysterese die Differenz zwischen Anlegepunkt 21a und Lösepunkt 21b der Bremse sehr groß.

Anhand der Übersetzung der Bremsbetätigung und deren mechanischem Wirkungsgrad bei niedrigen Kräften ergibt sich beispielsweise für eine Zuspannkraft F_{z} von 150 N eine Spannkraft von ca. 2100 N. Nach Abzug der Kraft der Rückstellfeder 8 verbleiben z.B. ca. 1100 N Anlegekraft am Bremsbelag 3. Für die Auslegung des Durchrutschmomentes für das vorliegende Beispiel werden die Gewindesteigung des Gewindestempels 6, 6', der Gewindewirkungsgrad und die Antriebsübersetzung herangezogen. Beispielsweise ergibt sich so ein Wert von ca. 3 Nm für das Durchrutschmoment der Elektromagnetkupplung 13.

In gleicher Weise wie oben für den Nachstellvorgang (Lüftspielverkleinerung) beschrieben, kann auch eine Lüftspielvergrößerung mittels der Elektromagnetkupplung 13 gesteuert werden. Bei Erkennen eines zu kleinen Lüftspiels wird die Elektromagnetkupplung 13 bei noch geschlossener, d.h. zugespannter, Scheibenbremse 1 bereits angesteuert. Bei beginnendem Lösehub rutscht die Elektromagnetkupplung 13 zunächst durch, bis der Lösepunkt 21b, d.h. der Leerhub, erreicht ist. Dann erfolgt ein Zurückdrehen der Nachstellerwelle 11b mit dem damit gekoppelten Gewindestempel 6 und über die Synchroneinrichtung 15 gekoppelten anderen Gewindestempel 6', bis der Bremsdrehhebel 9 in seiner Ausgangsstellung, z.B. an einem Anschlag, angekommen ist. Nach Beendigung des Bremsvorgangs wird die Elektromagnetkupplung 13 stromlos geschaltet, d.h. ausgekuppelt. Wird jedoch zuvor das einzustellende Lüftspiel schon erreicht (z.B. durch die Sensoreinrichtung 16 erfasst, wie unten noch erläutert wird), erfolgt das Ausschalten vorher.

Zur Steuerung des Einstellvorgangs ist eine Sensierung des aktuellen Lüftspiels erforderlich. Zweckmäßig wird hierzu die Erfassung des Schwenkhubs des Bremsdrehhebels 9 oder des Bremszylinders mit einer Erkennung des Anlegepunktes kombiniert. Mögliche Ausführungsformen dazu werden unten weiter noch näher beschrieben.

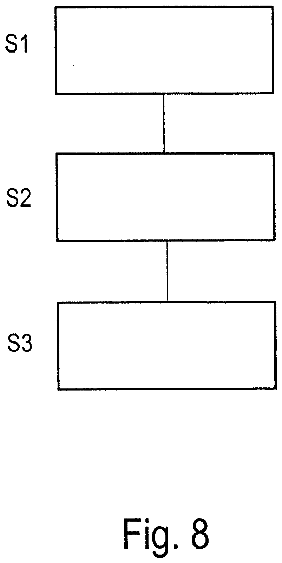

Eine Ansteuerung der Elektromagnetkupplung 13 kann als Schrittsteuerung zur Einstellung des Lüftspiels in dem vorgebbaren Justagestreuband 20 erfolgen. Dies wird weiter unten noch ausführlich im Zusammenhang mit Fig. 8 beschrieben.

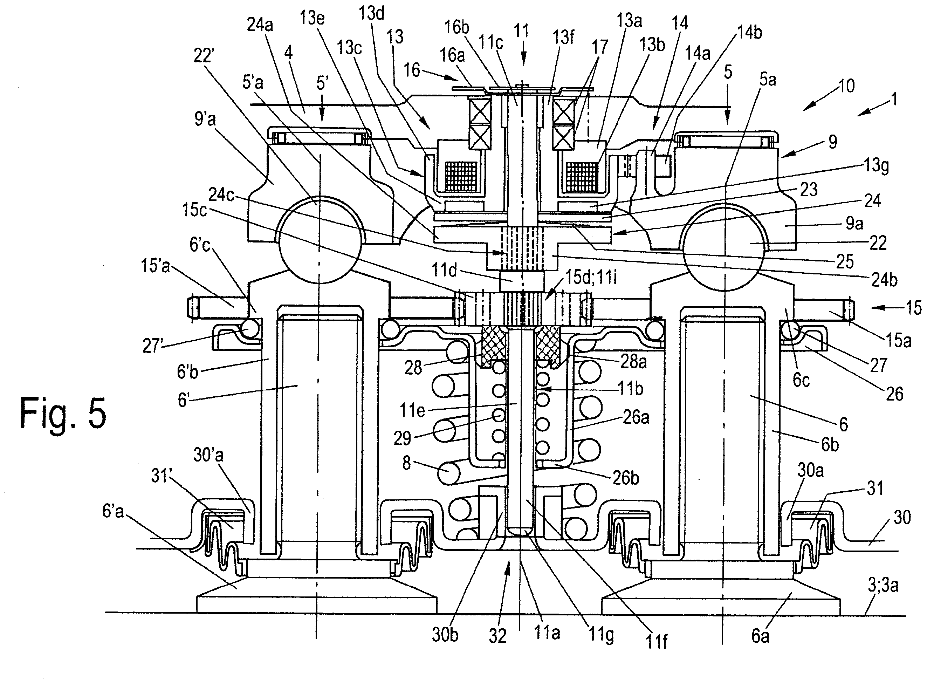

Fig. 5 zeigt eine schematische Schnittansicht eines zweiten Ausführungsbeispiels der erfindungsgemäßen Scheibenbremsenanordnung.

Die Scheibenbremse 1 ist mit zwei Spindeleinheiten 5, 5' mit jeweils einer Spindelachse 5a, 5'a ausgeführt. Die Belagverschleißnachstellvorrichtung 10 weist die Nachstelleinrichtung 11 und in diesem Ausführungsbeispiel zwei Mitnehmereinrichtungen auf, welche hier durch von jeweils einer Spindeleinheit 5, 5' gebildet und mit der Nachstelleinrichtung 11 über die Synchroneinrichtung 15 gekoppelt sind. Die Nachstelleinrichtung 11 ist zwischen den Spindeleinheiten 5, 5' angeordnet ist. Eine Nachstellerachse 11a der Nachstelleinrichtung 11 verläuft parallel zu den Spindelachsen 5a, 5'a. Jede Spindeleinheit 5, 5' weist einen Gewindestempel 6, 6' mit Druckstück 6a, 6'a auf. Der Bremsdrehhebel 9 ist hier gabelförmig mit zwei Hebelarmen 9a, 9'a ausgeführt, wobei die Nachstelleinrichtung 11 zentral in einer gabelförmigen Ausnehmung zwischen den Hebelarmen 9a, 9'a angeordnet ist.

Jeder Gewindestempel 6, 6' ist mit seinem Außengewinde in eine hohlzylinderförmige Gewindebuchse 6b, 6'b eingeschraubt, deren oberes Ende geschlossen ist und als oder mit einer Lagerschale für eine Druckkugel 22, 22' ausgebildet ist, die in der Lagerschale angeordnet ist. Jede Druckkugel 22, 22' steht mit einer Ausnehmung, die die Form einer Lagerschale besitzt und in dem zum Bremsbelag 3 weisenden Ende eines jeden Hebelarms 9a, 9'a des Bremsdrehhebels 9 eingeformt oder eingesetzt ist, in Zusammenwirkung. Somit steht der Bremsdrehhebels 9 über jeden Hebelarm 9a, 9'a mit einer Gewindebuchse 6b, 6'b und einem Gewindestempel 6, 6' mit dem Bremsbelag 3 in Wirkverbindung.

In Fig. 5 ist der Neuzustand der Bremsbeläge gezeigt, wobei die Gewindestempel 6, 6'a vollständig in die Gewindebuchse 6b, 6'b eingeschraubt sind. Die Gewindebuchsen 6b, 6'b sind hier in einem geringen Abstand unterhalb der oberen Ende der Gewindebuchsen 6b, 6'b jeweils mit einem Lagerabschnitt 6c, 6'c versehen, der in Gestalt einer Schulter ausgebildet ist und mit Buchsenlagern 27, 27' zusammenwirkt. Die Buchsenlager 27, 27' sind hier Wälzlager, welche in einem dazu ausgebildeten Verbindungsblech 26 aufgenommen und abgestützt sind.

Das Verbindungsblech 26 ist parallel zu dem Bremsbelag 3 angeordnet und steht in der Mitte zwischen den Spindeleinheiten 5, 5' mit der Rückstellfeder 8 in Kontakt. Die Rückstellfeder 8 ist als Druckfeder ausgebildet. Sie stützt sich mit ihrem zuspannseitigen Ende an der Unterseite des Verbindungsblechs 26 und mit ihrem bremsbelagseitigen Ende an der Oberseite eines Bodenblechs 30 ab, welches am Bremssattel 4 in nicht näher gezeigter Weise befestigt ist.

Auf die Gewindebuchsen 6b, 6'b wird über das Verbindungsblech 26 die Kraft der zentral angeordneten Rückstellfeder 8 eingeleitet. Die Buchsenlager 27, 27' ermöglichen den Gewindebuchsen 6b, 6'b die Verstelldrehbewegung unter der wirkenden Vorspannkraft der Rückstellfeder 8 an den Kontaktstellen zum Verbindungsblech 26.

Jede Gewindebuchse 6b, 6'b ist mit ihrem bremsbelagseitigen Ende durch eine Öffnung der Bodenplatte 30 jeweils in einer Buchsenführung 30a aufgenommen und axial geführt. Jede dieser Öffnungen ist zum Bremsbelag 3 hin durch eine Dichtung 31, 31' (z.B. Faltenbalg) abgedichtet, wobei das obere Ende jeder Dichtung 31, 31' am Bodenblech 30 befestigt ist, und jedes untere Ende jeweils an dem zugehörigen Druckstück 6a, 6'a angebracht ist.

Die Nachstelleinrichtung 11 umfasst die Nachstellerwelle 11b mit der Nachstellerachse 11a, die Elektromagnetkupplung 13, eine Ankerscheibe 23, eine Ankernabe 24, ein Federelement 25, ein Antriebsrad 15c, ein Reibelement 28 mit einem Kraftspeicherelement 29.

Die Elektromagnetkupplung 13 umfasst einen Spulenträger 13a mit einer Elektromagnetspule 13b, einen Magnetkörper 13c und eine Reibfläche 13g.

Der Spulenträger 13a und der Magnetkörper 13c sind koaxial zueinander und zu der Nachstellerachse 11a angeordnet. Der Spulenträger 13a ist ringförmig ausgebildet und mit der Elektromagnetspule 13b im Bremssattel 4 ortsfest angebracht. Der Magnetkörper 13c ist glockenförmig mit einer Seitenwand 13d ausgebildet, die über eine Bodenwand 13e mit einem Zylinderabschnitt 13f verbunden ist. Der Zylinderabschnitt 13f ist in axialer Richtung etwa doppelt so lang wie die umlaufende Seitenwand 13d. Das nach oben über die Seitenwand 13d herausstehende Ende des Zylinderabschnitts 13f ist mit zwei Lagereinheiten 17 im Bremssattel verschwenkbar gelagert. Zwischen der Seitenwand 13d und dem Zylinderabschnitt 13f ist der ringförmige Spulenträger 13a so angeordnet, dass zwischen ihm und der Innenseite der umlaufenden Seitenwand 13d ein Spalt vorhanden ist. Die Unterseite des Spulenträgers 13a ist so ausgebildet, dass die Elektromagnetspule 13b einen Teil der Unterseite des Spulenträgers 13a bildet und mit einem weiteren (Luft-) Spalt zu der ringförmigen Innenseite der Bodenwand 13e der Elektromagnetkupplung 13 angeordnet ist. An der Unterseite der Bodenwand 13e des Magnetkörpers 13c der Elektromagnetkupplung 13 ist die Reibfläche 13g angebracht. Die Reibfläche 13g kann z.B. ein in eine ringförmige Ausnehmung der Unterseite der Bodenwand 13e eingesetzte Reibmaterial sein. Denkbar ist auch, dass die Außenfläche dieser Unterseite mit einem Reibmaterial beschichtet oder durch eine Oberflächenbehandlung mit einem festlegbaren Reibkoeffizient versehen ist.

An der zur Spindeleinheit 5 weisenden Außenseite der Seitenwand 13d ist das Antriebselement 14b des Antriebs 14 in Form einer Schaltgabel angebracht und fest mit der Seitenwand 13d und somit mit dem um die Nachstellerachse 11a drehbaren Magnetkörper 13c der Elektromagnetkupplung 13 fest verbunden. Das Antriebselement 14b in Schaltgabelform steht mit dem Betätiger 14a in Zusammenwirkung. Der Betätiger 14a ist hier ein Hebelpin, der mit dem Bremsdrehhebel 9 bzw. dem Hebelarm 9a des Bremsdrehhebels 9 fest verbunden ist.

Das aus der Lagereinheit 17 herausragende Ende des Zylinderabschnitts 13f des Magnetkörpers 13c der Elektromagnetkupplung 13 ist mit einem Magnetkörpersensor 16a der Sensoreinrichtung 16 gekoppelt, auf den unten noch weiter eingegangen wird.

Die Nachstellerwelle 11b weist ein Sensorende 11c auf, welches einerseits innerhalb des Zylinderabschnitts 13f des Magnetkörpers 13c der Elektromagnetkupplung 13 mit einem nicht näher bezeichneten Lager (z.B. Nadellager) gelagert und durch den Bremssattel 4 herausgeführt ist. Das Sensorende 11c ist an seinem Ende mit einem Nachstellersensor 16a versehen, welcher mit dem Magnetkörpersensor 16a zusammen in der Sensoreinrichtung 16 angeordnet ist und unten noch näher erläutert wird.

Die Nachstellerwelle 11b erstreckt sich von dem Sensorende 11c zentrisch durch den Zylinderabschnitt 13f der Elektromagnetkupplung 13 hindurch bis zu einem Wellenbund 11d, welcher die Ankernabe 24 axial trägt.

Die Ankernabe 24 weist einen scheibenförmigen Kupplungsabschnitt 24a auf, der mit einem darunter angeordneten nabenförmigen Nabenabschnitt 24b verbunden ist. Der Nabenabschnitt 24b ist mit einem Innenprofil als einem Verbindungsabschnitt 24c versehen.

Oberhalb des Wellenbunds 11d ist die Nachstellerwelle 11a mit einem Außenprofil über eine bestimmte Länge (etwas länger als ein Axialmaß der Ankernabe 24) versehen, das mit dem damit korrespondierenden Innenprofil des Verbindungsabschnitts 24c der Ankernabe 24 zusammenwirkt. Die Ankernabe 24 ist auf diese Weise mit der Nachstellerwelle 11a durch die Profilierung drehfest verbunden.

Zwischen der Unterseite der Bodenwand 13e des Magnetkörpers 13c der Elektromagnetkupplung 13 und der Oberseite des Kupplungsabschnitts 24a der Ankernabe 24 ist die von der Nachstellerwelle 11b getragene Ankerscheibe 23 angeordnet, welche von dem Federelement 25 gegen die Unterseite der Bodenwand 13e des Magnetkörpers 13c und die Reibfläche 13g gedrückt wird. Dabei stützt sich das Federelement 25 auf der Oberseite des Kupplungsabschnitts 24a der Ankernabe 24 ab. Das Federelement 25 ist z.B. eine Stahlfederlamelle oder eine Tellerfeder.

Das Federelement 25 überträgt einerseits das von der Ankerscheibe 23 aufgenommene Drehmoment auf die Ankernabe 24 und erzeugt andererseits stets eine leichte Druckkraft auf die Ankerscheibe 23, um diese zur Überbrückung von Bautoleranzen und verschleißbedingten Abstandsänderungen mit geringer Kraft an die Reibfläche 13g des Magnetkörpers 13c anzulegen.

Unterhalb des Wellenbunds 11d weist die Nachstellerwelle 11b eine weiteres Außenprofil 11i zur Zusammenwirkung mit einem damit korrespondierenden Innenprofil eines Übertragungsabschnitts 15d eines Antriebsrads 15c der Synchroneinrichtung 15, wobei das Antriebsrad 15c mit der Nachstellerwelle 11b auf diese Weise drehfest verbunden.

Oberhalb der Lagerabschnitte 6c, 6'c und dem Verbindungsblech 26 ist jeweils ein Synchronrad 15a, 15'a der Synchroneinrichtung 15 auf jeder Gewindebuchse 6b, 6'b aufgesetzt und mit dieser axial und drehfest verbunden. Mittig zwischen den Synchronrädern 15a und 15'a, die hier als Stirnzahnräder ausgebildet sind, ist das ebenfalls als Stirnrad ausgeführte Antriebsrad 15c auf der Nachstellerwelle 11b angeordnet und steht mit den Synchronrädern 15a und 15'a in Eingriff. Das Antriebsrad 15c überträgt die Drehbewegungen der Nachstellerwelle 11b der Nachstelleinrichtung 11 auf die Gewindebuchsen 6b, 6'b der Spindeleinheiten 5, 5'.

Von diesem Außenprofil 11i aus erstreckt sich die Nachstellerwelle 11b mit einem Wellenabschnitt 11e weiter durch eine zylinderförmige Vertiefung des Verbindungsblechs 26 hindurch. Die zylinderförmige Vertiefung ist mittig im Verbindungsblech 26 hier mit einer umlaufenden Wand 26a und einem zum Bremsbelag 3 weisenden Boden 26b angeordnet. Der Boden 26b ist mit einer Öffnung versehen, durch welche sich der Wellenabschnitt 11e der Nachstellerwelle 11b hindurch erstreckt und dann in einen Lagerabschnitt 11f übergeht. Der Lagerabschnitt 11f endet in einem Lagerende 11g, welche in einem Lagerelement 30b in der Mitte des Bodenblechs 30 zwischen den Spindeleinheiten 5, 5' aufgenommen und axial geführt sind. Das Lagerelement 30b kann einstückig mit dem Bodenblech 30 gebildet sein oder als ein Zusatzteil mit dem Bodenblech 30 in geeigneter Weise verbunden sein.

Innerhalb der zylinderförmigen Vertiefung des Verbindungsblechs 26 ist das Reibelement 28 mit Axialführungsabschnitten 28a (z.B. Außenprofil) in einer damit korrespondierenden (nicht gezeigten) Innenprofilierung der Wand 26a axial verschiebbar geführt und dadurch drehfest mit der Wand 26a und somit mit dem Verbindungsblech 26 fest verbunden. Der Wellenabschnitt 11e der Nachstellerwelle 11b erstreckt sich durch das Reibelement 28 hindurch, ohne mit diesem verbunden zu sein. Das Reibelement 28 weist eine Zylindergestalt auf und steht mit seiner zur Zuspannseite weisenden Oberseite mit der Unterseite des Antriebsrads 15c in Kontakt. Die zum Bremsbelag 3 weisende Unterseite des Reibelementes 28 steht mit dem oberen Ende des hier als Druckfeder ausgebildeten Kraftspeicherelementes 29 in Verbindung. Das untere Ende des Kraftspeicherelementes 29 stützt sich auf der Innenseite des Bodens 26b der Vertiefung mit der Wand 26a ab und drückt das Reibelement 28 gegen das Antriebsrad 15c, welches seinerseits an dem Wellenbund 11d der Nachstellerwelle 11b anliegt und von diesem axial gehalten ist. Das Reibelement 28 und das Kraftspeicherelement 29 erzeugen so an dem Antriebsrad 15c ein definiertes Haltemoment.

Bei jeder Bremsbetätigung wird beim Zuspannen und Lösen der Scheibenbremse 1 der Betätiger 14a des Bremshebels 9 betätigt und über den Antrieb 14 und das Antriebselement 14b der damit fest verbundene Magnetkörper 13c der Elektromagnetkupplung 13 um die Nachstellerachse 11a verschwenkt. Eine Übertragung dieser Schwenkbewegung auf die Nachstellerwelle 11b der Nachstelleinrichtung 11 erfolgt nur dann, wenn die Elektromagnetspule 13b der Elektromagnetkupplung 13 bestromt wird. Dieser Einkupplungsvorgang erfolgt von der Steuereinrichtung 100 gesteuert wie oben beschrieben.

Dabei wird die Ankerscheibe 23 durch die Magnetkraft der eingeschalteten Elektromagnetspule 13b gegen die Reibfläche 13g des Magnetkörpers 13c gezogen und führt dann im eingeschalteten Zustand der Elektromagnetspule 13b die gleiche Schwenkbewegung wie diejenige des Magnetkörpers 13c aus. Diese Schwenkbewegung wird dann wie oben schon erläutert über das Federelement 25 auf die Ankernabe 24 und die Nachstellerwelle 11b übertragen. Die Nachstellerwelle 11b überträgt diese Schwenkbewegung auf das Antriebsrad 15c der Synchroneinrichtung 15, welche die Schwenkbewegung schließlich zur Einstellung des Lüftspiels über die Gewindebuchsen 6b, 6'b und Gewindestempel 6, 6' auf den Bremsbelag 3 überträgt.

Beim Betätigen der Scheibenbremse 1 ergeben sich aufgrund des Betätigungshubs der Spindeleinheiten 5, 5' mit den Gewindebuchsen 6b, 6'b und Gewindestempeln 6, 6' entsprechende Relativbewegungen im Zahneingriff zu dem axial fixierten Antriebsrad 15c der Synchroneinrichtung 15. Dies bedeutet einerseits, dass axiale Gleitbewegungen der Zahnflanken unter Last auftreten können, und andererseits ein Hin- und Herschwenken der Synchronräder 15a, 15'a infolge der drehgelenkigen Kopplung der Gewindebuchsen 6b, 6'b mit den Hebelarmen 9a, 9'a des Bremsdrehhebels 9. Die axiale Gleitbewegung und die durch das Schwenken verursachte Querbewegung an der drehgelenkigen Verbindung mit dem Bremsdrehhebel 9 können sich durch die Geradführungselemente am Bodenblech 30 zu Null reduzieren.

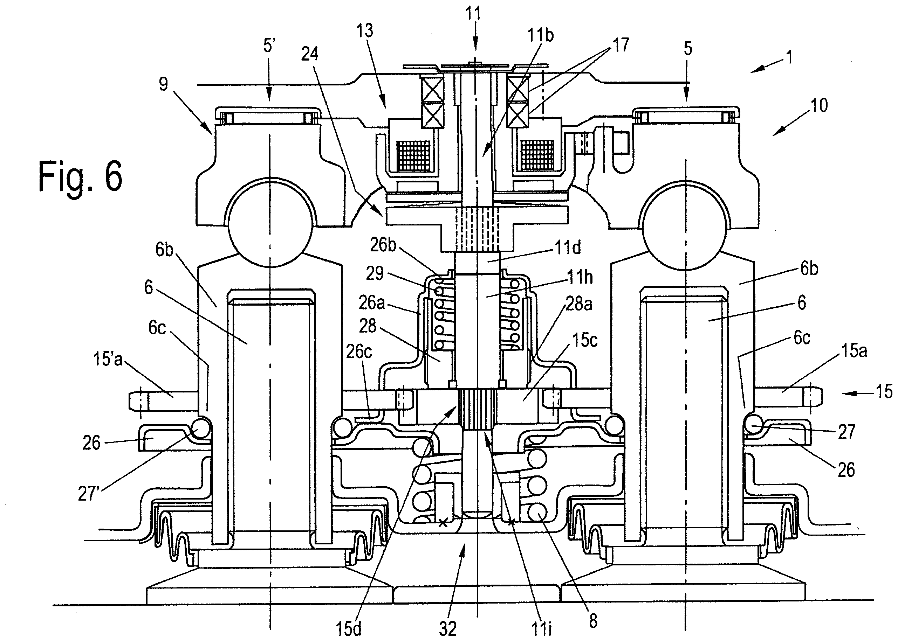

In Fig. 6 ist eine Variante des zweiten Ausführungsbeispiels nach Fig. 5 dargestellt.

Eine Minimierung der durch die Schwenkbewegung verursachten Querbewegungen kann dadurch erfolgen, dass die Synchroneinrichtung 15 so nahe wie möglich am Bodenblech 30 angeordnet wird. Im Gegensatz zu der Ausführung nach Fig. 5 ist die Position der Synchroneinrichtung 15 mit den Synchronrädern 15a, 15'a und dem Antriebsrad 15c etwa auf der halben Distanz zwischen den Drehgelenken mit den Druckkugeln 22, 22' und Buchsenführungen 30a, 30'a angeordnet.

Die in Fig. 5 zum Bremsbelag 3 weisende Vertiefung des Verbindungsblechs 26 weist nun nach oben zur Zuspannseite und ist glockenförmig mit der Wand 26a und dem Boden 26b mittels eines umlaufenden Kragens 26c mittig auf dem Verbindungsblech 26 in geeigneter Weise, z.B. geschweißt, angebracht. Dabei ist der Zwischenabschnitt 11h der Nachstellerwelle 11b in Verlängerung des Wellenbunds 11d mit gleichem Durchmesser wie der Wellenbund 11d ausgeführt und endet in einem Wellenabsatz, an den sich das Außenprofil 11i für das Antriebsrad 15c anschließt. Das Reibelement 28 und das Kraftspeicherelement 29 wirken wie oben beschrieben mit der Wand 26a und dem Boden 26b zusammen und sind umgedreht eingebaut, wie sich aus Fig. 5 eindeutig ergibt. Dabei weist der Boden 26b zur Zuspannseite und das Antriebsrad 15c wird auf der Nachstellerwelle 11b nach unten zum Bremsbelag 3 gedrückt axial verschiebbar gehalten.

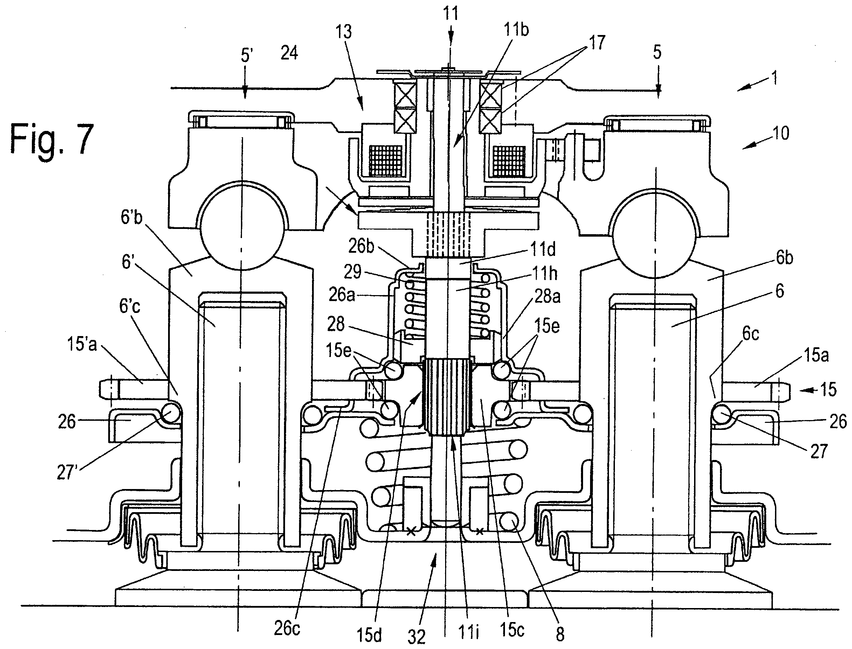

Eine weitere Variante des zweiten Ausführungsbeispiels nach Fig. 5 ist in Fig. 7 gezeigt.

In dieser Variante ausgehend von der Variante in Fig. 6 wird das Antriebszahnrad 15c mit eigenen Antriebsradlagern 15e in dem Verbindungsblech 26 aufgenommen. Dabei ist ein Antriebsradlager 15e bremsbelagseitig zwischen dem Verbindungsblech 26 und der Unterseite des Antriebsrads 15c angeordnet und ein weiteres Antriebsradlager 15e zwischen der Oberseite des Antriebsrads 15c und einer entsprechenden Ausbildung der Wand 26a vorgesehen. Es gibt somit außer dem Wälzkontakt der Verzahnungen der Synchronräder 15a, 15'a mit dem Antriebsrad 15c keine Relativbewegungen mehr zwischen dem Antriebsrad 15c und den Synchronrädern 15a, 15'a der Gewindebuchsen 6b, 6'b. Die Anbindung des Antriebsrads 15c an die Nachstellerwelle 11b erfolgt nun über eine Keil- oder Zahnverbindung als Außenprofil 11i, welche Drehkräfte überträgt und gleichzeitig eine axiale Verschiebung zulässt. Das Spiel in dieser Keil- oder Zahnverbindung muss groß genug sein, um das Kippen infolge der Schwenkbewegung zuzulassen.

Im Weiteren wird die Sensierung von Lüftspiel und Verschleiß beschrieben.

Eine Verschleißsensierung erfolgt durch Erfassung der Weiterdrehbewegung der Gewindestempel 6, 6' bzw. der Gewindebuchsen 6b, 6'b. Die Messung des aktuellen Lüftspiels kann wie bereits oben erwähnt durch Messung des Schwenkhubs des Bremsdrehhebels 9 und Erkennung des Anlegepunkts 21a der Scheibenbremse 1 (z.B. durch Ermittlung des Durchrutschens der Elektromagnetkupplung 13) realisiert werden.

Es ist nun möglich, alle für die Erfassung von Lüftspiel und Belagverschleiß erforderlichen Messgrößen/signale an den Bauteilen der Elektromagnetkupplung 13 abzugreifen.

Der Schwenkhub des Bremsdrehhebels 9 wird durch den Betätiger 14a des Antriebs 14 auf das Antriebselement 14b übertragen, das mit dem Magnetkörper 13c der Elektromagnetkupplung 13 fest verbunden ist. D.h., die Schwenkbewegung des Magnetkörpers 13c kann zur Ermittlung des Schwenkwegs des Bremsdrehhebels 9 erfasst werden.

Die Drehbewegung der Nachstellerwelle 11b, welche mit der Ankerscheibe 23 und dem Antriebsrad 15c drehfest verbunden ist, gibt unmittelbar die Nachstelldrehbewegung und damit den eingetretenen Verschleiß wieder.

Die Dreh-/Schwenkbewegungen von Magnetkörper 13c einerseits und Ankerscheibe 23/Nachstellerwelle 11b/Antriebsrad 15c andererseits sind während eines Einstellvorgangs bzw. Verstellvorgangs konform. Wenn der Verstellvorgang durch Erreichen des Anlegepunkts 21a unterbrochen wird, stoppt die Ankerscheibe 23 mit Nachstellerwelle 11b und Antriebsrad 15c, wohingegen der Magnetkörper 13c mit dem Bremsdrehhebel 9 weiter verschwenkt wird. Da die Dreh-/Schwenkbewegungen von Magnetkörper 13c und Nachstellerwelle 11b bereits für andere Zwecke erfasst werden, kann damit ohne weiteres der Beginn des Durchrutschens der Ankerscheibe 23 (d.h. der Elektrokupplung 13) und somit der Anlegepunkt 21a ermittelt werden.

Das aus dem Körper des Bremssattels 4 hervorstehende Ende des Zylinderabschnitts 13f des Magnetkörpers 13c ist mit dem Magnetkörpersensor 16a zur Erfassung der Schwenkbewegung des Magnetkörpers 13c gekoppelt. Außerdem ist das Sensorende 11c der Nachstellerwelle 11b im gleichen Bereich mit dem Nachstellersensor 16b zur Erfassung der Drehbewegung der Nachstellerwelle 11b gekoppelt. Diese Wellenenden mit den gekoppelten Sensoren können in ein gemeinsames Sensorgehäuse (nicht gezeigt, aber leicht vorstellbar) hineinragen. Es ist damit die Möglichkeit geschaffen, die notwendige Sensorelektronik der Sensoreinrichtung 16 mit der Steuerelektronik der Elektromagnetkupplung 13 und ggf. anderen vorhandenen Elektronikfunktionen zusammenzufassen.

Die Messung des Lüftspiels erfolgt auf diese Weise stets zusammen mit einem Nachstellvorgang. Wenn bei der Durchführung dieser Messung erkannt wurde, dass eine Nachstellung nicht erforderlich war, wird die Elektromagnetkupplung 13 auch im Lösehub geschlossen gehalten, wodurch die vorher erfolgte Zustellung wieder rückgängig gemacht wird.

Falls ein elektronisches Bremssystem (EBS) in dem Fahrzeug mit der Scheibenbremse 1 vorhanden ist, kann davon ausgegangen werden, dass aus der ermittelten Bremsenergie die eingetretenen Lüftspielveränderungen, wie z.B. Vergrößerung durch Verschleiß sowie Verkleinerung durch Belag- und Scheibenwachsen, in einer rechnerischen Prognose ermittelt werden und daraus der Bedarf für eine Lüftspielmessung und ggf. Lüftspielkorrektur abgeleitet wird.

Falls bei einer Lüftspielmessung erkannt wird, dass mehrere Nachstellvorgänge erforderlich sind, kann das elektronische Bremssystem (EBS) von der Steuereinrichtung 100 veranlasst werden, eine entsprechende Anzahl von leichten Bremsvorgängen auszuführen, um das Lüftspiel zu korrigieren. Diese Maßnahme kann besonders beim Start des Fahrzeugs sinnvoll sein, wenn eine Lüftspielvergrößerung durch das Abkühlen der Bremse oder einem vorhergegangenen Bremsservice eingetreten ist und die notwendigen Korrektur-Bremsbetätigungen bei stehendem Fahrzeug ausgeführt werden können. In Fahrzeugen ohne EBS kann eine entsprechende Information vom Bord-Infosystem an den Fahrer gemeldet werden, um diesen zur Ausführung der Korrektur-Bremsbetätigungen zu veranlassen.

Fig. 8 zeigt ein schematisches, beispielhaftes Flussdiagramm eines erfindungsgemäßen Verfahrens zum Steuern der elektrischen Belagverschleißnachstellvorrichtung 10.

In einem ersten Verfahrensschritt S1 wird bei einem Bremsvorgang die Elektromagnetkupplung 13 eingeschaltet und durch Ermitteln des Anlegepunkts 21a das aktuelle Lüftspiel erfasst.

In einem zweiten Verfahrensschritt S2 wird das ermittelte aktuelle Lüftspiel mit einem vorher festlegbaren Wert für ein Soll-Lüftspiel verglichen.

Eine Einstellung des Lüftspiels auf den Wert des Soll-Lüftspiels erfolgt entsprechend dieses Vergleiches in einem dritten Verfahrensschritt S3 nach einer Fallunterscheidung.

Eine Einstellung des Lüftspiels erfolgt durch eine Schrittsteuerung innerhalb des vorgebbaren Justagestreubands 20. Die Weite des Justagestreubands 20 ist dabei größer als die Schrittweite der Nachstelleinrichtung 11 im Bereich des Soll-Lüftspiels. Ist das aktuelle Lüftspiel größer als das Soll-Lüftspiel, wird die Elektromagnetkupplung 13 bei jeder Bremsbetätigung eingeschaltet, bis das aktuelle Lüftspiel dem Soll-Lüftspiel entspricht bzw. innerhalb des Justagestreubands 20 liegt. Die mögliche Genauigkeit und damit die erforderliche Weite des Justagestreubands 20 ist durch die Schrittweite der Nachstelleinrichtung 11 gegeben.

Die Schrittweite ist durch verschiedene Faktoren beeinflussbar.
1.) Durch die Übersetzung der Antriebsbewegung vom Bremsdrehhebel 9 auf die Spindeleinheit 5, 5': Bei kleineren Übersetzungen werden die Schrittweite und damit aber auch die Nachstellgeschwindigkeit insgesamt reduziert. Da die Nachstellgeschwindigkeit gegenüber einem Seriennachsteller jedoch bei gleicher Antriebsübersetzung erheblich erhöht ist, besteht hier ein Potential zur Optimierung der Schrittweite.
2.) Durch eine nichtlineare Übersetzung: Eine degressive Übersetzung ermöglicht eine hohe Nachstellgeschwindigkeit bei sehr großen Lüftspielen sowie geringerer Schrittweite und damit verbesserter Genauigkeit im Bereich des Soll-Lüftspiels.
3.) Durch ein "konstruktives Lüftspiel": Ein konstruktives Lüftspiel deutlich unterhalb des Soll-Lüftspiels, z.B. bei ca. 0,3 mm, ergibt im Bereich des Soll-Lüftspiels eine verringerte Schrittweite, da die Treppenkurve der Nachstelleinrichtung 11 asymptotisch auf diesen Wert zuläuft. Durch diese Maßnahme kann jedoch das Potential zur Lüftspielvergrößerung erheblich eingeschränkt werden.

Eine exakte Einstellung eines vorgegebenen Soll-Lüftspiels kann erfolgen, wenn die Weite des Justagestreubands 20 unter der Schrittweite der Nachstelleinrichtung 11 angesetzt wird. Bei Annäherung an den Wert des Soll-Lüftspiels wird die Elektromagnetkupplung 13 in Abhängigkeit von einem der verbliebenen Lüftspielabweichung entsprechenden Hubweg des Bremsdrehhebels 9 nur sehr kurzzeitig eingeschaltet, so dass, ggf. in mehreren Schritten, eine genauere Einstellung des Lüftspiels ermöglicht wird. Bei dieser Methode kann eine beliebig hohe Antriebsübersetzung gewählt werden, wobei die Anforderungen an die Steuerung und die Schaltgeschwindigkeit der Elektromagnetkupplung 13 entsprechend höher sind.

Die Erfindung ist nicht auf die oben beschriebenen Ausführungsbeispiele beschränkt. Sie ist im Rahmen der beigefügten Ansprüche modifizierbar.

Alternativ zum Hebelpin (Betätiger 14a) und zur Schaltgabel (Antriebselement 14b) ist auch eine Kopplung über einen Zahnradtrieb denkbar, z.B. eine Kronenradpaarung.

So ist es denkbar, dass eine Sensierung der Schwenkbewegung des Bremszustellhebels 9 auf andere als oben beschrieben Weise erfolgen kann.

Die Elektromagnetspule 13b kann auch zwei oder mehr Spulen aufweisen.

### Bezugszeichenliste

- 1: Scheibenbremse
- 2: Bremsbelag
- 2a: Bremsscheibendrehachse
- 3: Bremsbelag
- 3a: Bremsbelagträger
- 4: Bremssattel
- 4a: Deckel
- 5, 5': Spindeleinheit
- 5a, 5'a: Spindelachse
- 6, 6': Gewindestempel
- 6a, 6'a: Druckstück
- 6b, 6'b: Gewindebuchse
- 6c, 6'c: Lagerabschnitt
- 7: Traverse
- 8: Rückstellfeder
- 9: Bremsdrehhebel
- 9a, 9'a: Hebelarm
- 10: Belagverschleißnachstellvorrichtung
- 11: Nachstelleinrichtung
- 11a: Nachstellerachse
- 11b: Nachstellerwelle
- 11c: Sensorende
- 11d: Wellenbund
- 11e: Wellenabschnitt
- 11f: Lagerabschnitt
- 11g: Lagerende
- 11h: Zwischenabschnitt
- 11i: Außenprofil
- 12: Mitnehmereinrichtung
- 12a: Mitnehmerwelle
- 13: Elektromagnetkupplung
- 13a: Spulenträger
- 13b: Elektromagnetspule
- 13c: Magnetkörper
- 13d: Seitenwand
- 13e: Bodenwand
- 13f: Zylinderabschnitt
- 13g: Reibfläche
- 14: Antrieb
- 14a: Betätiger
- 14b: Antriebselement
- 15: Synchroneinrichtung
- 15a, 15'a: Synchronrad
- 15b: Synchronmittel
- 15c: Antriebsrad
- 15d: Übertragungsabschnitt
- 15e: Antriebsradlager
- 16: Sensoreinrichtung
- 16a: Magnetkörpersensor
- 16b: Nachstellersensor
- 17: Lagereinheit
- 18, 19: Nachstellkurve
- 20: Justagestreuband
- 20a, 20b: Streubandgrenze
- 21: Kurve
- 21a: Anlegepunkt
- 21b: Lösepunkt
- 21c: Ansprechkraft
- 22, 22': Druckkugel
- 23: Ankerscheibe
- 24: Ankernabe
- 24a: Kupplungsabschnitt
- 24b: Nabenabschnitt
- 24c: Verbindungsabschnitt
- 25: Federelement
- 26: Verbindungsblech
- 26a: Wand
- 26b: Boden
- 26c: Kragen
- 27, 27': Buchsenlager
- 28: Reibelement
- 28a: Axialführungsabschnitt
- 29: Kraftspeicherelement
- 30: Bodenblech
- 30a, 30'a: Buchsenführung
- 30b: Lagerelement
- 31, 31': Dichtung
- 32: Nachstellerwellenlager
- 100: Steuereinrichtung
- F_{z}: Zuspannkraft
- S1-3: Verfahrensschritt
- t: Zeit
- Wz: Zylinderweg
- zₛ: Zuspannweg

## Patentansprüche

1. Scheibenbremsenanordnung mit einer Scheibenbremse (1), insbesondere für ein Kraftfahrzeug, die eine Zuspannvorrichtung, insbesondere mit einem Bremsdrehhebel (9), mindestens eine Spindeleinheit (5, 5'), eine Belagverschleißnachstellvorrichtung (10) mit einer Nachstelleinrichtung (11) mit einer Elektromagnetkupplung (13) und eine Sensoreinrichtung (16) aufweist, und mit einer Steuereinrichtung (100), wobei die Nachstelleinrichtung (11) über einen Antrieb (14) mit der Zuspannvorrichtung, insbesondere mit dem Bremsdrehhebel (9), gekoppelt ist, wobei die Elektromagnetkupplung (13) als Reibungskupplung ausgebildet ist,
**dadurch gekennzeichnet, dass**
die Elektromagnetkupplung (13) einen an einem Bremssattel (4) der Scheibenbremse (1) ortsfest angeordneten Spulenträger (13a) mit einer Elektromagnetspule (13b) und einen zum Spulenträger (13a) drehbar angeordneten Magnetkörper (13c), der mit einer Nachstellerwelle (11b) der Nachstelleinrichtung (11) koppelbar ist, aufweist.

2. Scheibenbremsenanordnung nach Anspruch 1, **dadurch gekennzeichnet, dass** der Magnetkörper (13c) über den Antrieb (14) mit der Zuspannvorrichtung, insbesondere mit dem Bremsdrehhebel (9), gekoppelt ist

3. Scheibenbremsenanordnung nach Anspruch 2, **dadurch gekennzeichnet, dass** der Magnetkörper (13c) zumindest teilweise mit einer Reibfläche (13g) versehen ist, wobei der Magnetkörper (13c) und die Reibfläche (13g) zur Zusammenwirkung mit einer Ankernabe (24), die mit der Nachstellerwelle (11 b) drehfest gekoppelt ist, vorgesehen sind.

4. Scheibenbremsenanordnung nach Anspruch 3, **dadurch gekennzeichnet, dass** zwischen der Ankernabe (24) und dem Magnetkörper (13c) mit der Reibfläche (13g) eine Ankerscheibe (23) angeordnet ist.

5. Scheibenbremsenanordnung nach Anspruch 4, **dadurch gekennzeichnet, dass** die Ankerscheibe (23) mit der Ankernabe (24) über ein Federelement (25) verbunden ist.

6. Scheibenbremsenanordnung nach Anspruch 5, **dadurch gekennzeichnet, dass** die Sensoreinrichtung (16) mindestens einen Zuspannwegsensor und mindestens einen Belagverschleißsensor, insbesondere für einen Schwenkhub des Bremsdrehhebels (9), aufweist.

7. Scheibenbremsenanordnung nach Anspruch 6, **dadurch gekennzeichnet, dass** die Nachstelleinrichtung (11) den mindestens einen Zuspannwegsensor und den mindestens einen Belagverschleißsensor aufweist.

8. Scheibenbremsenanordnung nach Anspruch 7, **dadurch gekennzeichnet, dass** der mindestens eine Zuspannwegsensor als Magnetkörpersensor (16a) mit dem Magnetkörper (13c) der Elektromagnetkupplung (13) gekoppelt ist, und dass der mindestens eine Belagverschleißsensor als Nachstellersensor (16b)I mit der Nachstellerwelle (11b) gekoppelt ist.

9. Scheibenbremsenanordnung nach Anspruch 8, **dadurch gekennzeichnet, dass** die Nachstelleinrichtung (11) in einer Spindeleinheit (5, 5') der Scheibenbremse (1) oder zwischen zwei Spindeleinheiten (5, 5') der Scheibenbremse (1) angeordnet ist.

10. Scheibenbremsenanordnung nach Anspruch 9, **dadurch gekennzeichnet, dass** die Nachstelleinrichtung (11) zwischen zwei Spindeleinheiten (5, 5') der Scheibenbremse (1) angeordnet ist, wobei die Nachstellerwelle (11b) der Nachstelleinrichtung (11) mit einem Antriebsrad (15c) gekoppelt ist, das mit Synchronrädern (15a, 15'a) einer Synchroneinrichtung (15) in Eingriff steht, und wobei das Antriebsrad (15c) mit einem Reibelement (28), welches von einem Kraftspeicherelement (29) mit einer Kraft beaufschlagt ist, in Kontakt steht.

11. Scheibenbremsenanordnung nach Anspruch 10, **dadurch gekennzeichnet, dass** das Antriebsrad (15c) über Antriebsradlager (15e) in einem Verbindungsblech (26) gelagert ist.

12. Scheibenbremsenanordnung nach Anspruch 11, **dadurch gekennzeichnet, dass** Gewindebuchsen (6b, 6'b) der Spindeleinheiten (5, 5') an dem Verbindungsblech (26) jeweils über ein Buchsenlager (27, 27') gelagert sind.

13. Verfahren zum Steuern der elektrischen Belagverschleißnachstellvorrichtung (10) der Scheibenbremsenanordnung nach einem der vorhergehenden Ansprüche, mit den Verfahrensschritten
(S1) Einschalten der Elektromagnetkupplung (13) zu Beginn einer Bremsbetätigung und Erfassen eines aktuellen Lüftspiels durch Ermitteln eines Anlegepunkts (21a);
(S2) Erkennen einer Veränderung des Lüftspiels durch Vergleich mit einem vorher festgelegten Wert eines Soll-Lüftspiels; und
(S3) Steuern der elektrischen Belagverschleißnachstellvorrichtung (10) zum Einstellen des Werts des Soll-Lüftspiels,
**dadurch gekennzeichnet, dass**
das Ermitteln des Anlegepunkts (21a) durch Erfassen einer Schwenkbewegung eines Magnetkörpers (13c) der Elektromagnetkupplung (13) und Erfassen einer Drehbewegung einer Nachstellerwelle (11b) der Nachstelleinrichtung (11) erfolgt.

14. Verfahren nach Anspruch 13, **dadurch gekennzeichnet, dass** das Steuern der elektrischen Belagverschleißnachstellvorrichtung (10) zum Einstellen des Werts des Soll-Lüftspiels nach einer Fallunterscheidung erfolgt.

15. Verfahren nach Anspruch 13 oder 14, **dadurch gekennzeichnet, dass** das Steuern der elektrischen Belagverschleißnachstellvorrichtung (10) durch eine Schrittsteuerung innerhalb eines vorgebbaren Justagestreubands (20) erfolgt.

16. Verfahren nach Anspruch 15, **dadurch gekennzeichnet, dass** eine Weite des Justagestreubands (20) dabei größer ist als eine Schrittweite der Nachstelleinrichtung (11) im Bereich des Soll-Lüftspiels.

17. Verfahren nach Anspruch 15, **dadurch gekennzeichnet, dass** eine Weite des Justagestreubands (20) unter der Schrittweite der Nachstelleinrichtung (11) angesetzt wird, wobei bei Annäherung an den Wert des Soll-Lüftspiels die Elektromagnetkupplung (13) kurzzeitig eingeschaltet wird.

## Claims

1. A disc brake assembly having a disc brake (1), in particular for a motor vehicle, that comprises an application device, in particular with a rotary brake lever (9), at least one spindle unit (5, 5'), a pad-wear adjusting device (10) with an adjusting device (11) with an electromagnetic coupling and a sensor device (16), and having a control device (100), the adjusting device (11) being coupled via a drive unit (14) with the application device, in particular with the rotary brake lever (9), the electromagnetic coupling (13) taking the form of a friction coupling,
**characterised in that**
the electromagnetic coupling (13) has a coil carrier (13a) that is arranged in a fixed position on a calliper (4) of the disc brake (1) and comprises an electromagnetic coil (13b) and a magnet body (13c) that is arranged such that it is able to rotate in relation to the coil carrier (13a) and can be coupled with an adjuster shaft (11b) of the adjusting device (11).

2. A disc brake assembly according to claim 1, **characterised in that** the magnet body (13c) is coupled via the drive unit (14) with the application device, in particular with the rotary brake lever (9).

3. A disc brake assembly according to claim 2, **characterised in that** at least part of the magnet body (13c) is provided with a friction surface (13g), the magnet body (13c) and the friction surface (13g) being provided in order to cooperate with an armature hub (24) that is coupled rotationally conjointly with the adjuster shaft (11b).

4. A disc brake assembly according to claim 3, **characterised in that** an armature plate (23) is arranged with the friction surface (13g) between the armature hub (24) and the magnet body (13c).

5. A disc brake assembly according to claim 4, **characterised in that** the armature plate (23) is connected to the armature hub (24) via a spring element (25).

6. A disc brake assembly according to claim 5, **characterised in that** the sensor device (16) has at least one application travel sensor and at least one pad-wear sensor, in particular for a pivot stroke of the rotary brake lever (9).

7. A disc brake assembly according to claim 6, **characterised in that** the adjusting device (11) comprises the at least one application travel sensor and the at least one pad-wear sensor.

8. A disc brake assembly according to claim 7, **characterised in that** the at least one application travel sensor is coupled with the magnet body (13c) of the electromagnetic coupling (13) as a magnet body sensor (16a) and the at least one pad-wear sensor is coupled with the adjuster shaft (11b) as an adjuster sensor (16b).

9. A disc brake assembly according to claim 8, **characterised in that** the adjusting device (11) is arranged in a spindle unit (5, 5') of the disc brake (1) or between two spindle units (5, 5') of the disc brake (1).

10. A disc brake assembly according to claim 9, **characterised in that** the adjusting device (11) is arranged between two spindle units (5, 5') of the disc brake (1), the adjuster shaft (11b) of the adjusting device (11) being coupled with a drive gear (15c) that is engaged with synchronous gears (15a, 15'a) of a synchronising device (15) and the drive gear (15) being in contact with a friction element (28) upon which a force is exerted by an accumulator (29).

11. A disc brake assembly according to claim 10, **characterised in that** the drive gear (16c) is mounted in a connecting plate (26) by means of drive gear bearings (15e).

12. A disc brake assembly according to claim 11, **characterised in that** threaded bushes (6b, 6'b) of the spindle units (5, 5') are mounted on the connecting plate (26) by means of sleeve bearings (27, 27').

13. A method for controlling the electric pad-wear adjusting device (10) of the disc brake assembly according to any one of the preceding claims, having the following steps:
(S1) switching on the electromagnetic coupling (13) at the start of brake actuation and the recording of the air gap at the time by ascertaining a contact point (21a);
(S2) detecting a change in the air gap by comparing it to a previously set value for a reference air gap; and
(S3) controlling the electric pad-wear adjusting device (10) in order to set the value of the reference air gap,
**characterised in that** the contact point (21a) is ascertained by recording a pivoting movement of a magnet body (13c) of the electromagnetic coupling (13) and recording a rotational movement of an adjuster shaft (11b) of the adjusting device (11).

14. A method according to claim 13, **characterised in that** controlling the electric pad-wear adjusting device (10) serves to set the value of the reference air gap following differentiation.

15. A method according to claim 13 or 14, **characterised in that** the electric pad-wear adjusting device (10) is controlled by means of step control within a predeterminable adjustment scatter band (20).

16. A method according to claim 15, **characterised in that** in this configuration a width of the adjustment scatter band (20) is greater than a step width of the adjusting device (11) in the region of the reference air gap.

17. A method according to claim 15, **characterised in that** a width of the adjustment scatter band (20) below the step width of the adjusting device (11) is set, the electromagnetic coupling (13) being switched on briefly when this width approaches the value of the reference air gap.

## Revendications

1. Agencement de frein à disque, comprenant un frein (1) à disque, notamment pour un véhicule automobile, qui a un système de serrage ayant notamment un levier (9) tournant de frein, au moins une unité (5, 5') de broche, un système (10) de rattrapage d'usure des garnitures, ayant un dispositif (11) de rattrapage, ayant un embrayage (13) électromagnétique et un dispositif (16) de capteur, et comprenant un dispositif (100) de commande, le dispositif (11) de rattrapage étant accouplé par un entraînement (14) au système de serrage, notamment au levier (9) tournant de frein, l'embrayage (13) électromagnétique étant constitué sous la forme d'un embrayage à friction,
**caractérisé en ce que**
l'embrayage (13) électromagnétique a un support (13a) de bobine, qui est monté à poste fixe sur un étrier (4) de frein du frein (1) à disque et qui a une bobine (13b) d'électroaimant et un corps (13c) d'aimant monté tournant par rapport au support (13a) de bobine et pouvant être accouplé à un arbre (11b) de rattrapeur du dispositif (11) de rattrapage.

2. Agencement de frein à disque suivant la revendication 1, **caractérisé en ce que** le corps (13c) d'aimant est couplé au système de serrage, notamment au levier (9) tournant de frein, par l'intermédiaire de l'entraînement (14).

3. Agencement de frein à disque suivant la revendication 2, **caractérisé en ce que** le corps (13c) d'aimant est pourvu, au moins en partie, d'une surface (13g) de frottement, le corps (13c) d'aimant et la surface (13g) de frottement étant prévus pour coopérer avec un moyeu (24) d'ancrage, qui est solidaire en rotation de l'arbre (11b) de rattrapeur.

4. Agencement de frein à disque suivant la revendication 3, **caractérisé en ce qu'**un disque (23) d'ancrage est disposé entre le moyeu (24) d'ancrage et le corps (13c) d'aimant ayant la surface (13g) de frottement.

5. Agencement de frein à disque suivant la revendication 4, **caractérisé en ce que** le disque (23) d'ancrage est relié au moyeu (24) d'ancrage par l'intermédiaire d'un élément (25) de ressort.

6. Agencement de frein à disque suivant la revendication 5, **caractérisé en ce que** le dispositif (16) de capteur a au moins un capteur de trajet de serrage et au moins un capteur d'usure de garniture, notamment pour une course de pivotement du levier (9) tournant de frein.

7. Agencement de frein à disque suivant la revendication 6, **caractérisé en ce que** le dispositif (11) de rattrapage a le au moins un capteur de trajet de serrage et le au moins un capteur d'usure de garniture.

8. Agencement de frein à disque suivant la revendication 7, **caractérisé en ce que** le au moins un capteur de trajet de serrage est couplé, en tant que capteur (16a) du corps d'aimant, au corps (13c) d'aimant de l'embrayage (13) électromagnétique et **en ce que** le au moins un capteur d'usure de garniture est couplé, en tant que capteur (16b) de rattrapeur, à l'arbre (11b) de rattrapeur.

9. Agencement de frein à disque suivant la revendication 8, **caractérisé en ce que** le dispositif (11) de rattrapage est disposé dans une unité (5, 5') de broche du frein (1) à disque ou entre deux unités (5, 5') de broche du frein (1) à disque.

10. Agencement de frein à disque suivant la revendication 9, **caractérisé en ce que** le dispositif (11) de rattrapage est disposé entre deux unités (5, 5') de broche du frein (1) à disque, l'arbre (11b) de rattrapeur du dispositif (11) de rattrapage étant couplé à une roue (15c) motrice, qui est en prise avec des roues (15a, 15'a) de synchronisation d'un dispositif (15) de synchronisation et la roue (15c) motrice est en contact avec un élément (28) de frottement, qui est soumis à une force par un élément (29) d'accumulation de force.

11. Agencement de frein à disque suivant la revendication 10, **caractérisé en ce que** la roue (15c) motrice est montée dans une tôle (26) de liaison par l'intermédiaire d'un palier (15ₑ) de roue motrice.

12. Agencement de frein à disque suivant la revendication 11, **caractérisé en ce que** des douilles (6b, 6'b) taraudées des unités (5, 5') de broche sont montées sur la tôle (26) de liaison, respectivement, par un palier (27, 27') de douille.

13. Procédé de commande du système (10) électrique de rattrapage d'usure de garniture de l'agencement de frein à disque suivant l'une des revendications précédentes, comprenant les stades de procédé
(S1) mise en circuit de l'embrayage (13) électromagnétique au début d'un actionnement du frein et détection d'un jeu de garnitures en cours par détermination d'un point (21a) d'application ;
(S2) détection d'une modification du jeu des garnitures par comparaison avec une valeur fixée auparavant d'un jeu des garnitures de consigne ; et
(S3) commande du système (10) électrique de rattrapage d'usure des garnitures pour régler la valeur du jeu des garnitures de consigne,
**caractérisé en ce que**
la détermination du point (21a) d'application s'effectue par détection d'un déplacement en pivotement d'un corps (13c) d'aimant de l'embrayage (13) électromagnétique et détection d'un mouvement de rotation d'un arbre (11b) de rattrapeur du dispositif (11b) de rattrapeur du dispositif (11) de rattrapage.

14. Procédé suivant la revendication 13, **caractérisé en ce que** la commande du système (10) électrique de rattrapage d'usure des garnitures pour régler la valeur du jeu de garniture de consigne s'effectue suivant une discrimination de cas.

15. Procédé suivant la revendication 13 ou 14, **caractérisé en ce que** la commande du système (10) électrique de rattrapage d'usure de garniture s'effectue par une commande pas à pas dans une bande (2) de dispersion de réglage donnée à l'avance.

16. Procédé suivant la revendication 15, **caractérisé en ce qu'**une largeur de la bande (20) de dispersion de réglage est d'autant plus grande qu'une largeur de pas du dispositif (11) de réglage et dans la plage du jeu de garniture de consigne.

17. Procédé suivant la revendication 15, **caractérisé en ce que** l'on met la bande (20) de dispersion de réglage en dessous de la largeur de pas du dispositif (11) de rattrapage, dans lequel, lorsque l'on tend vers la valeur du jeu des garnitures de consigne, on met en circuit brièvement l'embrayage (13) électromagnétique.
